# EUROPÄISCHE PATENTSCHRIFT

(11) **EP 1 917 428 B1**
(45) Veröffentlichungstag und Bekanntmachung des Hinweises auf die Patenterteilung: **13.12.2017**
(21) Anmeldenummer: 06792763.2
(22) Anmeldetag: 09.08.2006
(51) Int. Cl.: F02C 6/16, F01D 19/00

(54) **VERFAHREN ZUM BETRIEB EINER KRAFTWERKSANLAGE MIT EINEM DRUCKSPEICHER**
METHOD OF OPERATING A POWER PLANT WHICH COMPRISES A PRESSURE STORAGE VESSEL
PROCÉDÉ D'OPERATION D'UNE CENTRALE ELECTRIQUE EQUIPEE D'UN RESERVOIR SOUS PRESSION

(30) Priorität: 23.08.2005 CH 13812005
(43) Veröffentlichungstag der Anmeldung: 07.05.2008
(73) Patentinhaber: General Electric Technology GmbH, 5400 Baden (CH)
(72) Erfinder: ALTHAUS, Rolf, CH-8704 Herrliberg (CH)
(74) Vertreter: General Electric Technology GmbH
(86) Internationale Anmeldenummer: PCT/EP2006/065189
(87) Internationale Veröffentlichungsnummer: WO 2007/023094

(56) Entgegenhaltungen:
- EP-A- 1 564 391
- WO-A2-2006/069948
- DE-A1- 19 518 093
- DE-A1- 19 621 926
- DE-A1-102004 034 657
- DE-A1-102004 040 577
- US-B1- 6 276 123

## Beschreibung

### Technisches Gebiet

Die vorliegende Erfindung betrifft eine Kraftwerksanlage gemäss dem Oberbegriff des Anspruchs 1.

### Stand der Technik

Aus dem Stand der Technik sind Gasturbinenkraftwerke bekannt geworden, bei welchen die Abgaswärme einer Gasturbogruppe zur Dampferzeugung genutzt wird, wobei der Dampf vielfältigen Anwendungszwecken zugeführt werden kann. In Kombikraftwerken wird der Dampf dann bestimmungsgemäss unter Leistungsabgabe in einer Dampfturbine entspannt. Die Dampfturbine treibt einen Generator zur Stromerzeugung an.

Weiterhin ist beispielsweise aus der US 5,537,822 eine rekuperative Druckspeicheranlage bekannt gewordenen, bei der in einem Speichervolumen unter Druck gespeichertes Fluid, insbesondere Luft, in einem Wärmetauscher vom Abgas einer Gasturbogruppe erwärmt und nachgängig in einer Speicherfluid-Entspannungsmaschine zum Antrieb eines Generators unter Leistungsabgabe entspannt wird. Prinzipiell können hierbei sehr hohe Leistungen erzielt werden, da während des Leistungsbetriebes auf die Verdichtung des Fluides verzichtet wird. Dementsprechend ergeben sich bei der Nutzung der Abgaswärme in einer rekuperativen Druckspeicheranlage höhere Leistungspotenziale als bei der Nutzung in einer Dampfturbine. Diese Potenziale stehen aber nur solange zur Verfügung, wie gespanntes Fluid auf einem entsprechenden Druckniveau im Speichervolumen verfügbar ist.

Weitere Ausführungen von Druckspeicheranlagen sind aus der DE10 2004 034657 und der EP1564391 bekannt.

Eine solche Kraftwerksanlage löst sonach zwei entscheidende Probleme nicht, welche mit deren Betrieb im engsten Zusammenhang stehen. Zum einen die unter Umständen bereits aufgeführte Position, wonach die Potenziale nur solange zur Verfügung stehen, wie gespanntes Fluid auf einem entsprechenden Druckniveau im Speichervolumen verfügbar ist.

Zum anderen, selbst wenn diese Schwachstelle behoben werden kann, verbleibt noch eine weitere Unzulänglichkeit übrig, welche mit dem Erfordernis im Zusammenhang steht, nämlich eine solche Kraftwerksanlage über einen sogenannten "Black Start" in Betrieb nehmen zu können. Eine in Verbindung mit einem Druckluftspeicher und einer Luftturbine schwarzstartfähige Gasturbinen-Gruppe ist aus der DE10 2004 040577 bekannt.

### Darstellung der Erfindung

Der Erfindung liegt die Aufgabe zugrunde, bei einer Schaltung nach dem Oberbegriff des Anspruchs 1, Massnahmen vorzuschlagen, welche die Schwarzstart-Fähigkeit eine Kombikraftwerks durch autonome kraftwerksinterne Mittel unmittelbar zu ermöglichen.

Die zum Stand der Technik beschriebene Kraftwerksanlage lässt sich durch eine Erweiterung flexibel gestalten, indem die Gasturbogruppe optional mit einem Dampfkreislauf kombiniert wird, dergestalt, dass die beiden Kreisläufe, welche einzeln betrachtet an sich zum Stand der Technik gehören, in höchst synergetischer und betriebstechnisch sehr vorteilhafter Weise zusammen zu führen. Eine solche Kraftwerksanlage, nämlich die Gasturbogruppe mit einem Dampfkreislauf und mit einer Druckspeicheranlage zu kombinieren, ermöglicht zunächst eine maximale Betriebsflexibilität.

Die obengenannte Schwachstelle einer solchen Kraftwerksanlage, welche bei einem notwendig gewordenen "Black Start" keine Autonomie aufweist, lässt sich beheben, indem das Potential der Druckspeicheranlage herangezogen wird, dergestalt, dass ein Teil der dort gespeicherten Luft durch den abströmungsseitig angeordneten Wärmetauscher geleitet wird. Dieser Wärmetauscher, der zum Betrieb der Kraftwerksanlage bei der rekuperativen Betriebsart über die Druckspeicheranlage gehört, weist ein immanentes Wärmepotential auf, so dass die vom Druckspeicher entnommene Luft, welche üblicherweise mit einem Druck von mindestens 60 bar bei einer Temperatur von ca. 30°C zur Verfügung steht, nach Durchströmung desselben auf ca. 550°C aufgewärmt wird. Der Druck dieser thermisch aufbereiteten Luft bleibt indessen immer noch hoch, üblicherweise in der Grössenordnung von ca. 55 bar.

Sonach steht eine hochwertige Arbeitsluft zur Verfügung, welche sich besonders gut eignet, die zur Kraftwerksanlage gehörende Speicherfluid-Entspannungsmaschine unmittelbar zu betreiben. Der über den mit der Speicherfluid-Entspannungsmaschine gekoppelten Generator produzierte Strom wird unmittelbar zum Starten der Gasturbogruppe eingesetzt, womit eine echte Autonomie bei der Inbetriebsetzung nach einem "Black out" gewährleistet wird. Dies ist ein wichtiger Beitrag bei der raschen Normalisierung der Stromvorsorgung im Lande nach einem "Black out", eingedenk der Tatsache, dass der Stromverbrauch bei der Inbetriebsetzung einer leistungsstarken Gasturbine leicht bis 15 MW benötigt.

Falls der Wärmetauscher bei einem solchen unmittelbaren Bedarf zu wenig Wärmespeicherung aus dem vorangehenden Betrieb aufweisen sollte, lässt sich dies leicht auffangen, indem beispielsweise Rohrbrenner vorgehen werden, welche in solchen Situationen unmittelbar eingreifen und so die nicht vorhandene Wärmekapazität kurzfristig beibringen können.

Durch die erfindungsgemässen Vorschläge lässt sich bei jedem "Black out" ohne Zeitverzug gezielt reagieren, und durch den hier vorgeschlagenen "Black Start" einen wesentlichen Beitrag zur raschen Normalisierung der ganzen Stromversorgung erzielen.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden. Gleiche Elemente sind in den verschiedenen Figuren, soweit solche ins Verfahren eingebracht werden, mit den gleichen Bezugszeichen versehen. Die Strömungsrichtung der Medien ist mit Pfeilen angegeben.

### Kurze Beschreibung der Zeichnung

Es zeigt:

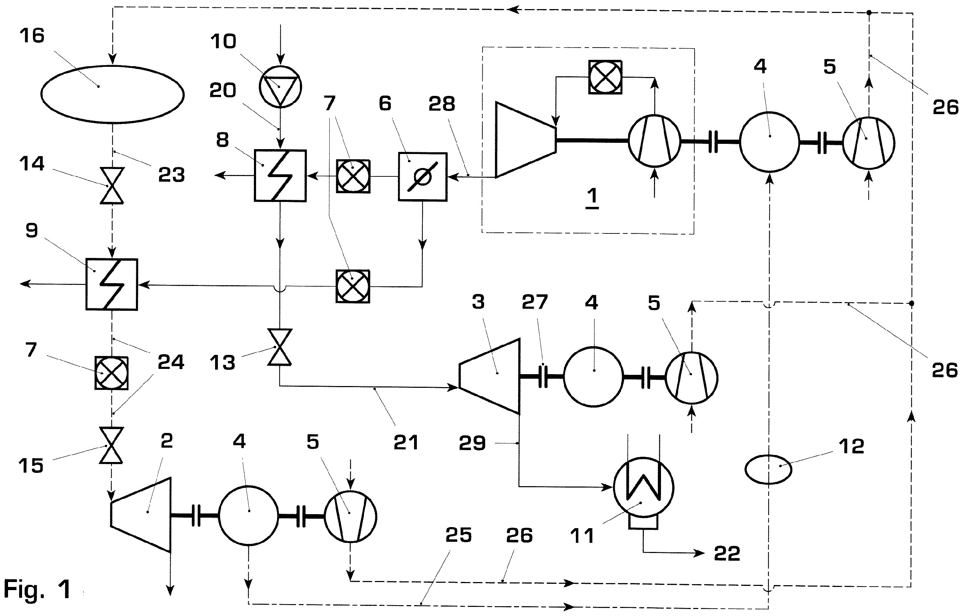

Fig. 1 eine Kraftwerksanlage, welche auf einem alternativen Betrieb aufgebaut ist.

### Wege zur Ausführung der Erfindung, gewerbliche Verwendbarkeit

Die in der Figur dargestellte Kraftwerksanlage umfasst eine Gasturbogruppe 1, eine Dampfturbine 3, sowie ein Druckluftspeicher 16 mit einer Luftturbine 2. Sowohl die Gasturbogruppe 1 als auch die Dampfturbine 3 als auch die Luftturbine 2 sind mit je einem Generator 4 und einem Verdichter 5 auf einem gemeinsamen Wellenstrang angeordnet. Dabei sind jeweils zwischen der jeweiligen Kraftmaschine und dem Generator sowie zwischen dem Verdichter und dem Generator schaltbare Kupplungen 27 vorgesehen. Vorzugsweise sind alle Generatoren 4 auch elektromotorisch betreibbar. Im Abgasströmungsweg der Gasturbogruppe 1 ist ein Strömungsverteiler 6 mit einer Klappe angeordnet, welche es ermöglicht, das Abgas 28 der Gasturbogruppe 1 wahlweise zu einem Dampferzeuger 8 für die Dampfturbine 3 oder zu einem Gas/Luft-Wärmetauscher 9 zu leiten. Vor dem Dampferzeuger 8 und dem Gas/Luft-Wärmetauscher 9 ist jeweils noch ein optionaler Rohrbrenner 7 angeordnet, welcher es ermöglicht, die in dem jeweiligen Wärmetauscher zur Verfügung stehende thermische Leistung zu erhöhen. Die Dampfturbine 3 und der Dampferzeuger 8 sind auf an sich bekannte Weise in einem Wasser-Dampf-Kreislauf integriert. Dieser umfasst eine Speisewasserpumpe 10, welche unter Druck stehendes Speisewasser 20 zum Dampferzeuger 8 fördert. Dort im Wärmetausch mit Abgasen 28 der Gasturbogruppe 1 erzeugter Frischdampf 21 wird über ein Frischdampfventil 13 zur Dampfturbine 3 geleitet und dort unter Leistungsabgabe entspannt. Der entspannte Dampf 29 wird in einem Kondensator 11 entspannt und das Kondensat 22 wird zur Speisewasserpumpe 10 zurückgeführt. Der Druckluftspeicher 16 ist mittels der Verdichter 5 mit Druckluft 26 befüllbar; in Zeiten hohen Leistungsbedarf wird diese Luft im Gas/Luft-Wärmetauscher 9 im Wärmetausch mit dem Abgas 28 der Gasturbogruppe 1 erhitzt und in der Luftturbine 2 unter Leistungsabgabe entspannt. Optional wird auch hier stromab dieses Wärmetauschers ein Rohrbrenner 7 vorgesehen, der dann zum Einsatz gelangt, wenn die Luftturbine 2 allein mit der vorhandenen Druckluft im Druckluftspeicher 16 betrieben werden soll. Dies ist beispielsweise dann der Fall, wenn in Folge eines Black Out zu einem sogenannten Black Start geschritten werden muss, um sukzessiv die Stromversorgung über zusammenhängende Gebiete sicher zu stellen. Eine solche Druckluftspeicheranlage steht zur Leistungsabgabe selbstverständlich nur über begrenzte Zeiträume zur Verfügung, solange also, bis der Druck in Druckluftspeicher 16 unter einen kritischen Wert abfällt. Die hier beschriebene Kraftwerksanlage ermöglicht zum Beispiel die folgenden Betriebsarten. In einem normalen Dauerbetrieb ist ein Generator 4 an die Gasturbogruppe 1 angekoppelt. Ein zweiter Generator 4 ist an die Dampfturbine 3 angekoppelt. Die Abgasklappe im Strömungsverteiler 6 ist demnach so gestellt, dass das Abgas 28 der Gasturbogruppe 1 zum Dampferzeuger 8 geleitet wird. Die Kraftwerksanlage arbeitet dann im herkömmlichen Kombibetrieb zur dauerhaften Stromerzeugung. Bei sinkendem elektrischen Leistungsbedarf und entsprechend niedrigeren Strompreisen wird zusätzlich die Verbindung mit den auf den Wellensträngen der Gasturbogruppe 1 und der Dampfturbine 3 angeordneten Verdichtern 5 hergestellt. Es ist nunmehr möglich, die Leistung der Gasturbogruppe 1 und/oder der Dampfturbine 3 zwischen den jeweiligen Generatoren 4 und Verdichtern 5 aufzuteilen. Es ist weiterhin möglich, die Generatoren 4 im Leerlauf oder gar zur Unterstützung des Antriebs der Verdichter 5 elektromotorisch zu betreiben. Zusätzlich kann auch der Generator 4 der Luftturbine 2 an einen Verdichter 5 angekoppelt und elektromotorisch betrieben werden. Auf diese Weise kann, bei niedrigeren Strompreisen, der Druckluftspeicher 16 sehr schnell gefüllt werden, womit eine wichtige Energiereserve zur Verfügung steht. In Zeiten hohen Leistungsbedarfs und entsprechend hoher Strompreise werden die Verdichter 5 stillgesetzt. Weiterhin wird auch die Dampfturbine 3 stillgesetzt. Das heisst, alle Verdichter 5, beziehungsweise wenigstens die Verdichter, die auf den Wellensträngen der Gasturbogruppe 1 und der Luftturbine 2 angeordnet sind, sind von den Generatoren 4 getrennt. Die Luftturbine 2 und die Gasturbogruppe 1 sind mit dem jeweiligen Generator 4 verbunden. Die Abgasklappe im Strömungsverteiler 6 ist so eingestellt, dass das Abgas 28 den Gas/Luft-Wärmetauscher 9 durchströmt. Das Absperrorgan 14, welches stromab des Druckluftspeichers 16 angeordnet ist, wird geöffnet, und somit wird Druckluft aus dem Druckluftspeicher 16 in den Gas/Luft-Wärmetauscher 9 geleitet, dort erhitzt, und zur Stromerzeugung in der Luftturbine 2 entspannt. Ein stromab des Gas/Luft-Wärmetauschers 9 angeordnetes Regelorgan 15 sorgt für die erwünschte Regelung des Massenstromes zur Luftturbine 2. Selbstverständlich ermöglicht die dargestellte Anordnung mit ihren vielfältigen Möglichkeiten der Fluidführung und der Leistungsaufteilung eine Vielzahl möglicher um weiter Betriebsvarianten, welche der Fachmann nach Bedarf realisiert, und die in diesem Rahmen nicht abschliessend dargestellt worden sind.

Kommt es nun aus irgendeinem Grund zu einem "Black Out" ist es wichtig, dass unmittelbar ein "Black Start" eingeleitet wird. Hierzu wird allein die Schaltung über den Druckluftspeicher 16 herangezogen, d.h. verfügt die Kraftwerksanlage auch die oben beschriebene Möglichkeit, den Betrieb über einen Dampfkreislauf aufrechtzuerhalten, so wird diese Schaltung zunächst vollumfänglich umgangen. Es steht nur die Schaltung mit dem Druckluftspeicher 16 zur Verfügung.

Aus diesem Druckluftspeicher 16 wird die dort gespeicherte Druckluft 23 entnommen, welche nun bestimmungsgemäss direkt zur Luftturbine 2 geleitet wird. Diese Druckluft und nach Bedarf mit dem dort abströmungsseitig des Gas/Luft-Wärmetauschers 9 angeordneten Rohrbrenner 7 entsprechend aufbereitet, wenn die Remanenz-Kalorik im Gas/Luft-Wärmetauscher 9 aus dem vorangegangenen Betrieb nicht mehr genügend sein sollte. Auf alle Fälle weist die Druckluft 24 vor Beaufschlagung der Luftturbine 2 über ein genügendes Potential auf, sowohl im Hinblick auf das thermische als auch auf das druckmässige Potential. Die nunmehr im zur Luftturbine 2 gehörenden und gekoppelten Generator 4 produzierte Stromenergie 25 wird unmittelbar zum Starten der Gasturbogruppe 1 eingesetzt, wie der Verlauf der Leitung 25 sehr gut zeigt, womit eine echte Autonomie bei der Inbetriebsetzung der Kraftwerksanlage nach einem "Black Out" gewährleistet wird. Dies ist ein wichtiger Beitrag zur raschen Normalisierung der Stromversorgung im Lande oder über weite zusammenhängende Regionen nach einem "Black Out", eingedenk der Tatsache, dass dies nicht ohne weiteres möglich wäre, denn der Stromverbrauch bei der Inbetriebsetzung einer leistungsstarken Gasturbine leicht bis 15 MW benötigt.

Der Wärmetauscher selbst, der zum Betrieb der Kraftwerksanlage bei der rekuperativen Betriebsart über die Druckspeicheranlage gehört, weist ein immanentes Wärmepotential auf, so dass die vom Druckspeicher entnommene Druckluft 23, welche üblicherweise mit einem Druck von mindestens 60 bar bei einer Temperatur von ca. 30°C zur Verfügung steht, nach Durchströmung desselben auf ca. 550°C aufgewärmt wird. Der Druck dieser thermisch aufbereiteten Druckluft bleibt indessen immer noch hoch, üblicherweise in der Grössenordnung von ca. 55 bar. Demnach steht genügendes Potential für die Aufbereitung der Arbeitsluft zur Verfügung, um sicher jene Stromenergie zu erzeugen, welche das Anfahren der Gasturbogruppe ermöglicht. Falls der Wärmetauscher bei einem solchen unmittelbaren Bedarf zu wenig Wärmespeicherung aus dem vorangehenden Betrieb aufweisen sollte, lässt sich dies leicht auffangen, indem beispielsweise der bereits erwähnte Rohrbrenner 7 zum Einsatz kommt, welcher in solchen Situationen unmittelbar eingreift und so die nicht vorhandene Wärmekapazität aus dem Gas/Luft-Wärmetauscher 9 kurzfristig einbringen kann.

Des weiteren ist in der Stromleitung 25 zur Speisung des zur Gasturbogruppe 1 gehörenden Generators 4 mit Energie für die Einleitung eines Black Start der Anlage ein statischer Frequenzumformer (SFC) 12 vorgesehen.

Ein "Black Start" der Kraftwerksanlage beschränkt sich indessen nicht nur als Anfahrhilfe im Nachgang eines "Black Out", sondern greift immer dann ein, wenn ein autonomer Wiederstart gewünscht ist.

### Bezugszeichenliste

- 1: Gasturbogruppe
- 2: Luftturbine
- 3: Dampfturbine
- 4: Generator(en)
- 5: Kompressor(en)
- 6: Strömungsverteiler mit Klappe
- 7: Rohrbrenner
- 8: Dampferzeuger
- 9: Gas/Luft-Wärmetauscher
- 10: Speisewasserpumpe
- 11: Kondensator
- 12: Statischer Frequenzumformer (SFC)
- 13: Frischdampfventil
- 14: Absperrorgan
- 15: Regelorgan
- 16: Druckluftspeicher
- 20: Speisewasser
- 21: Frischdampf
- 22: Kondensat
- 23: Druckluft
- 24: Thermisch aufbereitete Druckluft
- 25: Stromleitung
- 26: Druckluft(leitung)
- 27: Kupplung
- 28: Abgas
- 29: Entspannter Dampf

## Patentansprüche

1. Verfahren zum Betrieb einer Kraftwerksanlage, welche im wesentlichen aus einer Gasturbogruppe (1), einer Dampfturbine (3), einem Druckluftspeicher (16), einer mit mindestens einem Generator (4) ausgestattete Luftturbine (2) besteht, wobei die Gasturbogruppe (1), die Dampfturbine (3) und die Luftturbine (2) mit je einem Generator (4) und einem Verdichter (5) auf einem gemeinsamen Wellenstrang angeordnet sind, wobei zwischen der jeweiligen Kraftmaschine (1, 3, 2) und dem Generator (4) sowie zwischen dem Verdichter (5) und dem Generator (4) schaltbare Kupplungen (27) vorgesehen sind, und wobei in einem Abgasströmungsweg der Gasturbogruppe (1) ein Strömungsverteiler (6) mit einer Klappe angeordnet ist, welche es ermöglicht, das Abgas (28) der Gasturbogruppe (1) wahlweise zu einem Dampferzeuger (8) für die Dampfturbine (3) oder zu einem Gas/Luft-Wärmetauscher (9) zu leiten. wobei die aus dem Druckluftspeicher (16) entnommene Druckluft (23) durch den abströmungsseitig der Gasturbogruppe (1) wirkenden Gas/Luft-Wärmetauscher (9) geleitet und dort thermisch aufbereitet wird, und welche Druckluft (24) anschliessend die Luftturbine (2) beaufschlagt, und wobei bei einem "Black Out" oder sonstiger Ausserbetriebsetzung der Kraftwerksanlage die durch die thermisch aufbereitete Druckluft (24) in der Luftturbine (2) erzielbare Stromenergie über eine Stromleitung (25) direkt zur Inbetriebsetzung der Gasturbogruppe (1) eingesetzt wird, **dadurch gekennzeichnet, dass** in Zeiten hohen Leistungsbedarfs die Verdichter (5) und die Dampfturbine (3) stillgesetzt werden und die Abgasklappe im Strömungsverteiler (6) so eingestellt wird, dass das Abgas (28) den Gas/Luft-Wärmetauscher (9) durchströmt.

2. Verfahren nach Anspruch 1, **dadurch gekennzeichnet, dass** die Druckluft (23) aus dem Druckluftspeicher (16) nach Durchströmung des stromab wirkenden Wärmetauschers (9) durch einen Rohrbrenner (7) einer thermischen Aufbereitung vor Beaufschlagung der Luftturbine (2) unterzogen wird.

3. Verfahren nach den Ansprüchen 1 und 2, **dadurch gekennzeichnet, dass** die Druckluft (23) aus dem Druckluftspeicher (16) entweder im Wärmetauscher (9) oder durch den Rohrbrenner (7) oder sowohl als auch thermisch aufbereitet wird.

4. Verfahren nach Anspruch 1, **dadurch gekennzeichnet, dass** die Kraftwerksanlage mit einer Dampfturbine (3) erweitert ist, welche im Kombibetrieb mit aus den Abgasen (28) der Gasturbogruppe (1) erzeugtem Dampf (21) betrieben wird.

5. Verfahren nach den Ansprüchen 1 und 4, **dadurch gekennzeichnet, dass** Gasturbogruppe (1), Luftturbine (2) und Dampfturbine (3) mit je einem Generator (4) und einem Kompressor (5) betrieben werden, und dass die jeweiligen Kompressoren einzeln oder im Verbund bei Bedarf oder bei bestimmten Betriebszuständen der Kraftwerksanlage zur Aufladung des Druckluftspeichers (16) mit Druckluft (26) herangezogen werden.

6. Verfahren nach den Ansprüchen 1 und 4, **dadurch gekennzeichnet, dass** die Abgase (28) je nach Betriebsart entweder zur Aufbereitung einer Dampfmenge in einem Dampferzeuger (8) oder zur thermischen Aufbereitung der Druckluft (23) in einem weiteren Wärmetauscher (9) oder sowohl als auch eingesetzt werden.

7. Verfahren nach Anspruch 6, **dadurch gekennzeichnet, dass** die Abgase (28) nach Bedarf über zusätzliche Rohrbrenner (7) thermisch aufbereitet werden.

8. Verfahren nach Anspruch 1, **dadurch gekennzeichnet, dass** der Generator (4) der Gasturbogruppe (1) über einen statischen Frequenzumformer (12) mit Energie versorgt wird.

## Claims

1. Method for operating a power plant which is composed substantially of a gas turbine group (1), a steam turbine (3), a compressed-air accumulator (16), and an air turbine (2) equipped with at least one generator (4), wherein the gas turbine group (1), the steam turbine (3) and the air turbine (2) are arranged with in each case one generator (4) and one compressor (5) on a common shaft train, wherein switchable couplings (27) are provided between the respective power machine (1, 3, 2) and the generator (4) and between the compressor (5) and the generator (4), and wherein, in an exhaust-gas flow path of the gas turbine group (1), there is arranged a flow distributor (6) with a flap which enables the exhaust gas (28) of the gas turbine group (1) to be conducted selectively to a steam generator (8) for the steam turbine (3) or to a gas/air heat exchanger (9), wherein the compressed air (23) extracted from the compressed-air accumulator (16) is conducted through, and is thermally treated in, the gas/air heat exchanger (9) which acts at the outflow side of the gas turbine group (1), which compressed air (24) subsequently impinges on the air turbine (2), and wherein, in the event of a "blackout" or other stoppage of operation of the power plant, the electrical energy that can be obtained by means of the thermally treated compressed air (24) in the air turbine (2) is, via an electrical line (25), used directly for setting the gas turbine group (1) in operation, **characterized in that**, in times of high power demand, the compressor (5) and the steam turbine (3) are shut down, and the exhaust-gas flap in the flow distributor (6) is set such that the exhaust gas (28) flows through the gas/air heat exchanger (9).

2. Method according to Claim 1, **characterized in that** the compressed air (23) from the compressed-air accumulator (16) is, after flowing through the downstream heat exchanger (9), subjected to thermal treatment by means of a pipe burner (7) before impinging on the air turbine (2).

3. Method according to Claims 1 and 2, **characterized in that** the compressed air (23) from the compressed-air accumulator (16) is thermally treated either in the heat exchanger (9) or by means of the pipe burner (7) or both.

4. Method according to Claim 1, **characterized in that** the power plant is expanded to include a steam turbine (3) which is operated in a combined operation mode with the steam (21) generated from the exhaust gases (28) of the gas turbine group (1).

5. Method according to Claims 1 and 4, **characterized in that** gas turbine group (1), air turbine (2) and steam turbine (3) are operated with in each case one generator (4) and one compressor (5), and **in that** the respective compressors are used individually or in combination for the charging of the compressed-air accumulator (16) with compressed air (26) as required or in certain operating states of the power plant.

6. Method according to Claims 1 and 4, **characterized in that** the exhaust gases (28) are, depending on the operation mode, used either for the treatment of a steam quantity in a steam generator (8) or for the thermal treatment of the compressed air (23) in a further heat exchanger (9) or for both.

7. Method according to Claim 6, **characterized in that** the exhaust gases (28) are thermally treated as required by means of additional pipe burners (7).

8. Method according to Claim 1, **characterized in that** the generator (4) of the gas turbine group (1) is supplied with energy via a static frequency converter (12).

## Revendications

1. Procédé d'exploitation d'une centrale électrique composée pour l'essentiel d'un groupe de turbines à gaz (1), d'une turbine à vapeur (3), d'un réservoir d'air comprimé (16), d'une turbine à air (2) équipée d'au moins un générateur (4), le groupe de turbines à gaz (1), la turbine à vapeur (3) et la turbine à air (2) avec respectivement un générateur (4) et un compresseur (5) étant disposés sur une chaîne d'arbres commune, des couplages (27) connectables entre le moteur (1, 3, 2) respectif et le générateur (4) ainsi qu'entre le compresseur (5) et le générateur (4) étant prévus et un répartiteur d'écoulement (6) avec un clapet étant disposé dans un chemin de gaz d'échappement du groupe de turbines à gaz (1) permettant d'amener le gaz d'échappement (28) du groupe de turbines à gaz (1) au choix à un système de production de vapeur (8) pour la turbine à vapeur (3) ou à un échangeur thermique gaz/air (9), l'air comprimé (23) pris dans le réservoir d'air comprimé (16) étant guidé à travers l'échangeur thermique (9) agissant du côté d'écoulement sortant du groupe de turbines à gaz (1) et y étant traité thermiquement et ledit air comprimé (24) chargeant ensuite la turbine à air (2) et en cas de « panne » ou autre événement de mise hors service de la centrale électrique, l'énergie de flux pouvant être atteinte dans la turbine à air (2) par l'air comprimé (24) traité thermiquement étant utilisé, via une conduite de flux (25), directement pour la mise en fonctionnement du groupe de turbines à gaz (1), **caractérisé en ce qu'**à de moments de grand besoin de puissance, les compresseurs (5) et la turbine à vapeur (3) sont arrêtés et que le clapet de gaz d'échappement est placé de telle sorte dans le répartiteur d'écoulement (6) que le gaz d'échappement (28) traverse l'échangeur thermique gaz/air (9).

2. Procédé selon la revendication 1, **caractérisé en ce que** l'air comprimé (23) est prélevé hors du réservoir d'air comprimé (16), après passage par l'échangeur thermique (9) agissant en aval, au travers d'un brûleur tubulaire (7) d'un traitement thermique, avant sollicitation de la turbine à air (2).

3. Procédé selon les revendications 1 et 2, **caractérisé en ce que** l'air comprimé (23) sortant du réservoir d'air comprimé (16) est traité soit dans l'échangeur thermique (9) ou au travers du brûleur tubulaire (7) ou aussi thermiquement.

4. Procédé selon la revendication 1, **caractérisé en ce que** la centrale électrique est élargie avec une turbine à vapeur (3) entraînée en exploitation combinée avec la vapeur (21) produite hors des gaz d'échappement (28) du groupe de turbines à gaz (1).

5. Procédé selon les revendications 1 et 4, **caractérisé en ce que** le groupe de turbines à gaz (1), la turbine à air (2) et la turbine à vapeur (3) sont entraînés avec respectivement un générateur (4) et un compresseur (5) et que les compresseurs respectifs extraient de l'air comprimé (26) individuellement ou conjointement en cas de besoin ou dans des états d'exploitation déterminés de la centrale électrique pour charger le réservoir d'air comprimé (16).

6. Procédé selon les revendications 1 et 4, **caractérisé en ce que** les gaz d'échappement (28) sont respectivement utilisés en fonction du mode d'exploitation soit pour traiter une quantité de vapeur dans un système de production de vapeur (8) soit pour traiter thermiquement l'air comprimé (23) dans un échangeur thermique (9) supplémentaire soit pour les deux.

7. Procédé selon la revendication 6, **caractérisé en ce que** les gaz d'échappement (28) sont préparés thermiquement en cas de besoin via des brûleurs tubulaires (7) supplémentaires.

8. Procédé selon la revendication 1, **caractérisé en ce que** le générateur (4) du groupe de turbines à gaz (1) est alimenté en énergie via un convertisseur de fréquences (12) statique.
